Europäisches Patentamt

**European Patent Office**

**Office européen des brevets**

(11) Numéro de publication: **0 148 710**
**A1**

(12) # DEMANDE DE BREVET EUROPEEN

(21) Numéro de dépôt: **84420192.1**

(51) Int. Cl.⁴: **A 01 L 7/02**

(22) Date de dépôt: **13.11.84**

---

(30) Priorité: **14.11.83 FR 8318250**

(71) Demandeur: **Figueras, Michel, Les Fuziers, F-38540 St. Just Chaleyssin (FR)**

(72) Inventeur: **Figueras, Michel, Les Fuziers, F-38540 St. Just Chaleyssin (FR)**

(74) Mandataire: **Ropital-Bonvarlet, Claude et al, Cabinet BEAU DE LOMENIE 99, Grande rue de la Guillotière, F-69007 Lyon (FR)**

(43) Date de publication de la demande: **17.07.85 Bulletin 85/29**

(84) Etats contractants désignés: **DE FR GB IT**

---

(54) **Semelle pour sabot de cheval.**

(57) Accessoire hippique.
La semelle pour sabot de cheval comprend:
. une plaque pleine (1),
. un enrobage (2) formant une couche supérieure (3), une couche d'usure (4),
. une zone (5) en matière perforable constituant une valve de gonflage,
. un trou (6) pratiqué en coïncidence avec la valve pour déboucher dans une zone dépourvue d'adhérence entre la couche (4) et la plaque.
Application aux sabots de chevaux.

EP 0 148 710 A1

Semelle pour sabot de cheval :

La présente invention concerne le matériel hippique, au sens général, et elle vise, plus particulièrement, les matériels destinés à équiper les sabots de chevaux.

La domestication a amené les chevaux à quitter leur environnement naturel et à marcher sur des sols de plus en plus durs et, souvent même, constitués de revêtements artificiels en pierres, en agglomérés ou, encore, en matériaux enrobés.

Ces différents sols imposent des contraintes élevées aux sabots des chevaux et sont responsables de détérioration de la corne, de maladies inflammatoires, d'affaissements et de troubles articulaires.

Pour remédier à certains de ces inconvénients, il est connu depuis longtemps de parer les sabots et de les équiper de fers destinés à représenter des pièces d'usure, mais aussi des armatures maintenant les sabots contre les risques d'éclatement. Par fer, il faut entendre le terme générique incluant la réalisation de tels équipements en métal, mais aussi en matière plastique.

Ces différents équipements ne donnent pas satisfaction car ils ne confèrent pas un bon accrochage sur le sol et ne contribuent pas, au contraire, à filtrer ou amortir les chocs résultant de l'impact du sabot sur le sol.

Ces inconvénients sont notoires pour les chevaux utilisés pour le trait, la promenade ou la course, mais sont plus importants encore lorsque les chevaux pratiquent le saut d'obstacle. En effet, l'impact de l'animal après le passage d'un obstacle est fonction de la vitesse, du poids et de la hauteur de chute. Le passage fréquent d'obstacles sur un sol dur impose aux chevaux une fatigue générale et, notamment, articulaire, préjudiciable au développement des qualités du cheval.

Pour tenter de remédier à cet inconvénient, on a proposé d'équiper les sabots des chevaux avec une enveloppe ou un sac emprisonné entre le fer et le sabot. Ce sac comporte une ouverture arrière dans laquelle peut être engagée une vessie gonflable. Ceci est notamment enseigné par le brevet anglais 187 294.

Compte tenu des charges et contraintes, une telle solution ne revêt aucun aspect pratique, car le sac ou l'enveloppe, de même que la vessie, sont très rapidement détériorés. En outre, au moment de l'impact, la vessie n'est pas à même d'assurer un amortissement et, surtout, ne supprime pas l'impact entre le sol et le fer.

On a proposé, également, de munir les fers traditionnels d'une sorte de patin en matière déformable. Un tel enseignement est donné par le brevet français 78-11 596 (2 422 330). Compte tenu des efforts supportés, une telle solution ne permet pas, d'une part, d'absorber l'impact au moment de la réception du cheval sur le sol et, d'autre part, de fournir une liaison mécanique suffisamment résistante entre le fer traditionnel et le patin rapporté.

On a proposé, également, par la demande française 82-21 963, de réaliser un patin ou analogue comprenant une armature et deux couches de matière déformable disposées de part et d'autre de l'armature et délimitant entre elles une chambre pouvant être gonflée par l'intermédiaire d'une valve accessible à partir de la périphérie du patin.

Si une telle solution peut être considérée comme apportant un enseignement nouveau par rapport à la connaissance antérieure, il s'est avéré, en pratique, qu'un tel patin, parfaitement réalisable, n'offrait pas une résistance mécanique suffisante et était détruit rapidement après une durée d'utilisation courte.

Les expériences ont permis de constater que de tels patins ne sont pas à même, étant donné leur constitution, de résister aux charges appliquées lors de l'impact après passage d'un obstacle ou lors du galop sur un sol dur. Ceci est, principalement, dû au fait que la chambre gonflée est soumise, lors du contact du sabot avec le sol, à une montée en pression tellement élevée que la matière déformable la délimitant se déchire.

L'objet de l'invention est, justement, de remédier aux inconvénients ci-dessus en proposant une nouvelle semelle pour sabot de cheval particulièrement conçue en une seule pièce ou, plus particulièrement, de façon monobloc, tout en comportant une possibilité de gonflage local, de manière à présenter une bonne résistance aux contraintes appliquées lors de la course, du galop et/ou du saut d'obstacle.

L'objet de l'invention est de proposer une nouvelle semelle dont les différents éléments constitutifs sont intimement associés pour former un ensemble unitaire particulièrement robuste.

Un autre objet de l'invention est de proposer une nouvelle semelle pour sabot de cheval assumant une fonction efficace d'antiglissement, d'amortissement, voire de restitution d'énergie emmagasinée, sans contraindre la fourchette et/ou la sole sensible du sabot de cheval.

Un objet supplémentaire de l'invention est de proposer une nouvelle semelle pour sabot de cheval présentant la particularité de comporter un volume gonflable à volonté, c'est-à-dire pouvant être gonflé à toute pression souhaitée et/ou dégonflé selon les besoins ou les conditions d'utilisation.

Un objet encore de l'invention est de proposer une nouvelle semelle pour sabot de cheval pouvant posséder, le cas échéant, une fonction orthopédique susceptible de combattre ou de compenser une tendance à l'affaissement de la voûte et/ou de la sole du sabot, ainsi que de la fourchette de ce dernier.

Pour atteindre les buts ci-dessus, la semelle pour sabot de cheval est caractérisée en ce qu'elle comprend :

                - une armature constituée par une plaque,

                - un enrobage de l'armature en matière à dureté Shore comprise entre 45 et 100, constitué en une seule partie autour de la plaque et formant :

                    . une couche supérieure au moins partielle adhérant à la surface supérieure de la

4

plaque,

. et une couche dite d'usure, intimement reliée à la couche supérieure sur toute la périphérie de la plaque, adhérant en partie à la face correspondante par rapport à laquelle elle comporte une zone sensiblement centrale dépourvue d'adhérence et présentant des ouvertures laissant apparaître la plaque et réservées au passage et à l'appui de têtes de vis de fixation traversant des trous exécutés, à la demande, dans la plaque à partir des ouvertures,

- une zone de matière de dureté Shore comprise entre 25 et 55, choisie pour son aptitude à l'auto-obstruction en cas de perforation et formée sur la face opposée à la couche d'usure pour constituer une valve pour une aiguille de gonflage,

- un trou pratiqué, en coïncidence avec la valve, dans la partie de ladite plaque correspondant à la zone dépourvue d'adhérence avec la couche d'usure.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une demi-vue en plan demi-coupe d'une semelle conforme à l'invention.

La fig. 2 est une coupe-élévation prise selon la ligne II-II de la fig. 1.

La fig. 3 est une coupe-élévation, analogue à la fig. 2, mais illustrant la semelle dans un autre état d'utilisation.

Les fig. 4 et 5 sont des coupes partielles montrant, à plus grande échelle, deux variantes de réalisation de l'objet de l'invention.

La fig. 6 est une coupe-élévation, analogue à la fig. 2, mais illustrant un autre exemple de réalisation de l'objet de l'invention.

La fig. 7 est une vue en plan, prise selon la ligne VII-VII de la fig. 6.

Les fig. 8 et 9 sont deux coupes-élévations partielles montrant, à plus grande échelle, un autre développement de l'objet de l'invention.

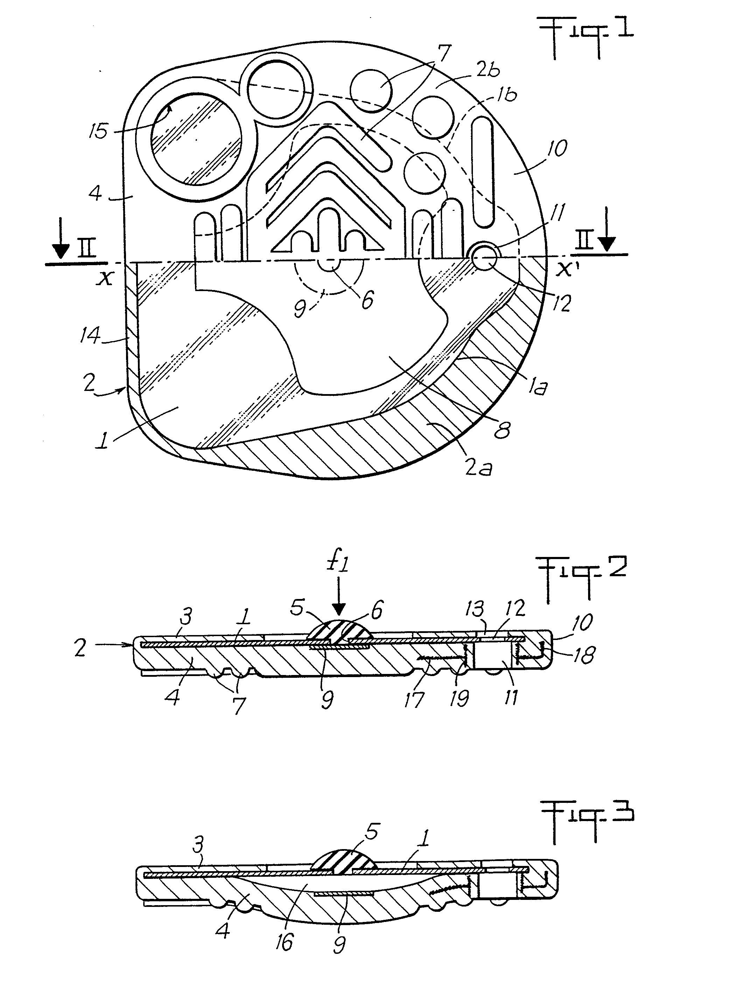

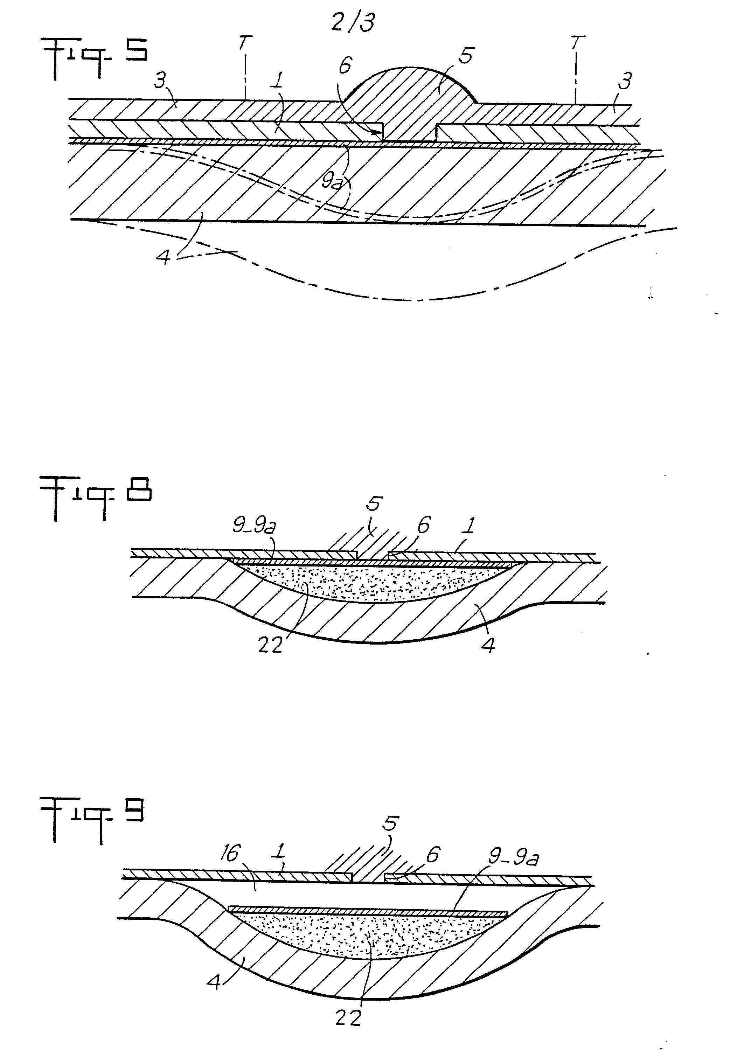

Les fig. 1 et 2 montrent une première forme de réalisation selon laquelle la semelle pour sabot comprend une armature 1 constituée par une plaque métallique d'épaisseur constante. Cette plaque affecte, sensiblement, une forme semblable à la forme en plan définitive de la semelle, avec, toutefois, des dimensions inférieures à cette dernière.

La plaque 1, de préférence pleine, est associée à un enrobage 2 en une matière présentant une dureté Shore comprise entre 45 et 100 et, par exemple, en caoutchouc chargé. L'enrobage 2 est réalisé pour former une couche supérieure 3 et une couche 4, dite d'usure, qui sont intimement liées entre elles à la périphérie de la plaque 1 qu'elles entourent. L'enrobage 2 est réalisé de façon monobloc ou en une seule pièce et en une seule opération pour entourer la plaque 1.

Dans l'exemple illustré par la fig. 2, la couche supérieure 3 est d'épaisseur relativement faible et couvre, en partie seulement, la face correspondante de la plaque 1 sur laquelle elle adhère fortement. La couche 3 laisse subsister, dans cet exemple, une zone centrale ou sensiblement centrale dépourvue de matière mais comportant, par contre, un bulbe, une saillie ou une tête 5 en forme de calotte sphérique dont la matière constitutive, adhérant fortement à la plaque, occupe, également, un trou traversant 6 présenté par la plaque 1. Le bulbe 5 est réalisé en une matière souple, déformable élastiquement, choisie pour son aptitude à l'auto-obstruction en cas de perforation par une aiguille. Une telle matière peut présenter une dureté Shore comprise entre 25 et 55. De préférence, le bulbe 5 et le remplissage du trou 6 sont en caoutchouc naturel de dureté Shore 30-35.

La couche d'usure 4 présente une épaisseur sensiblement supérieure à celle de la couche 3 et comporte, sur sa face opposée à cette dernière, des aspérités ou des découpes 7 destinées à conférer un coefficient d'adhérence particulièrement élevé. Dans certains cas, la couche 4 peut être réalisée en une matière présentant une dureté Shore différente de celle de la couche 3.

Les couches 3 et 4 pourraient aussi, éventuellement, être réalisées en polyuréthanne ou en élastomère.

Selon une caractéristique de l'invention, la couche 4 est rendue fortement adhérente de la face correspondante de la plaque 1, sauf dans une zone 8 sensiblement centrale de cette dernière. Dans cette zone 8, au contraire, la couche 4 est totalement dépourvue d'adhérence, de façon à laisser subsister un interface incluant la section ou l'orifice correspondant du trou 6.

La couche 4 est associée dans l'interface 8 à un opercule 9 qui occupe une position stable déterminée pour être situé face à l'orifice ou à la section du trou 6. L'opercule 9 est choisi en une matière présentant une bonne résistance au poinçonnage ou à la perforation et peut être inclus ou adhérant à la couche 4 ou, simplement, découpé pour être immobilisé à l'intérieur de l'interface 8 par coopération avec les bords de la zone dépourvue d'adhérence.

La couche 4 est réalisée pour laisser subsister, en retrait de la partie antérieure 10 de la semelle, un passage 11 coïncidant avec un trou 12 pratiqué dans la plaque 1 et avec lequel coïncide, également, une ouverture 13 prévue dans la couche 3. La couche 4 comporte, par ailleurs, de part et d'autre de l'axe longitudinal de symétrie X-X' et à proximité de la partie postérieure 14, deux ouvertures 15 laissant apparaître la plaque 1.

La semelle décrite ci-dessus est montée sur le fer du sabot d'un cheval au moyen de trois vis dont l'une est tout d'abord engagée dans le passage 11 pour traverser le trou 12 et être vissée dans la contrepartie complémentaire du fer du sabot. Cette opération est, de préférence, exécutée lorsque le fer n'est pas encore adapté sur le sabot.

Ceci permet d'adapter correctement la semelle sur le fer, en fonction de la forme et de la taille de ce dernier, puis, après retournement, de percer ensuite la plaque 1 dans les ouvertures 15, de manière à faire coïncider les trous ainsi pratiqués avec l'emplacement des trous postérieurs du fer.

Après adaptation du fer, la semelle peut ainsi être montée et solidement assujettie sur le fer par la vis antérieure et les deux vis postérieures qui établissent, en coopération avec la plaque, une liaison pafaite et résistante de la semelle.

L'examen de la fig. 1 permet de constater que la plaque 1 présente en plan, comme dit ci-dessus, une forme plus petite que celle de la semelle définitive. En particulier, la forme de la plaque est choisie pour que les bords antérieurs 1a et 1b soient situés bien en retrait de la périphérie de l'enrobage 2 réalisé en une seule pièce. Ceci est prévu à double fin. Tout d'abord, les zones 2a et 2b de l'enrobage, situées de part et d'autre de l'axe X-X', sont uniquement constituées de matière déformable. Ceci permet un encastrement éventuel des têtes des clous de fixation du sabot qui n'ont, ainsi, aucun contact avec la plaque 1. Par ailleurs, les zones 2a et 2b offrent une possibilité de taillage ou de rognage pour adapter le contour de la semelle à la forme du fer correspondant, lui aussi, à celle du sabot.

La semelle peut être utilisée dans l'état qui vient d'être décrit, étant donné que l'enrobage 2 est réalisé en une seule pièce et présente des caractéristiques d'adhérence élevées par rapport à l'armature ou plaque 1.

La semelle peut, toutefois, aussi être préalablement gonflée en introduisant par le bulbe 5, représentant une valve de gonflage, une aiguille, par exemple creuse du type hypodermique, prolongeant un dispositif de gonflage. L'introduction dans le sens de la flèche $f_1$ est effectuée pour que l'aiguille traverse, également, la matière occupant le trou 6 et pénètre dans l'interface où elle vient buter contre l'opercule 9. Ceci permet de donner à l'opérateur la sensation matérielle d'avoir placé l'extrémité de l'aiguille de gonflage exactement en relation avec l'interface dépourvu d'adhérence entre la couche 4 et la plaque 1. De la sorte, l'opérateur n'est pas tenté de prolonger son action dans le sens de la flèche $f_1$, laquelle aurait pour effet de provoquer la pénétration de l'aiguille de gonflage au sein de la matière constitutive de la couche 4.

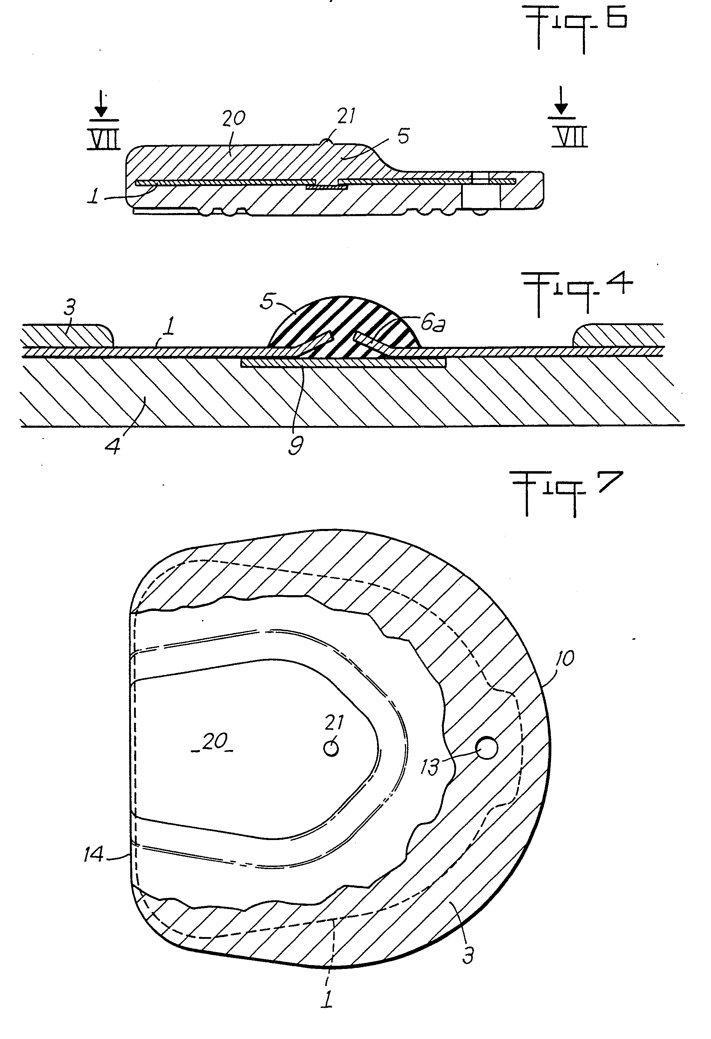

Dans cet état, il est possible de délivrer une charge de fluide comprimé qui est ainsi introduite dans l'interface correspondant à la zone 8. Il en résulte la formation d'une poche, d'une chambre ou d'un coussin 16 de fluide comprimé adoptant sensiblement la forme illustrée par la fig. 3. En effet, étant donné que la plaque 1 représente une armature indéformable, la pression du fluide comprimé provoque le gonflement de la partie intéressée de la couche 4, c'est-à-dire celle correspondant à la zone 8. Le gonflage peut être aisément adapté à la pression recherchée, puis l'aiguille est ensuite extraite du bulbe 5 dont la matière constitutive se referme naturellement pour obstruer le trou de pénétration de l'aiguille. Il en résulte une fermeture automatique étanche du coussin 16 emprisonnant la charge de fluide comprimé qui lui a été introduite.

Pour améliorer la fermeture étanche automatique, il peut être prévu de réaliser la plaque 1 pour lui faire comporter un embouti 6a bordant le trou 6, comme cela est illustré par la fig. 4. L'embouti 6a est par exemple formé par une dépression tronconique saillant à partir de la face de la plaque correspondant à la couche 3. La petite base de cette dépression correspond à l'orifice du trou 6 tandis que la grande base est située dans le plan de la face de la plaque 1 correspondant à la couche 4. Dans un tel cas, la masse de matière constituant le bulbe 5 remplit toute la dépression ménagée.

Après gonflement du coussin 16 comme dit précédemment, la pression développée contraint la matière occupant l'embouti et tend à la repousser en direction du trou 6. La forme tronconique de l'embouti soumet la matière à une compression périphérique de direction radiale centripète, ce qui vient parfaire l'obturation du trou percé dans la matière par l'introduction de l'aiguille de gonflage.

Cette tendance à l'obturation s'accroît encore lorsque le coussin 16 est soumis à écrasement ou aplatissement lors de l'appui ou de l'impact du sabot sur le sol.

Etant donné que la couche 4 adhère fortement à la plaque 1 sur tout le pourtour de la zone 8, la marche, le trot, le galop ou le saut d'obstacle pratiqué par le cheval produit, uniquement, lors de l'appui ou de l'impact du sabot sur le sol, une réduction de volume de la chambre 16. Ceci provoque une montée en pression du fluide comprimé contenu qui ne peut aucunement s'échapper, étant donné la réalisation en une seule pièce de la semelle et la liaison intime de la matière constitutive de l'enrobage 2 et de cette matière avec la plaque 1.

Ainsi, outre l'effet d'amortissement et de filtration des chocs ou vibrations qui en résulte, il se produit, lorsque le cheval, par transfert de poids, soulage le sabot correspondant, une restitution du travail emmagasiné contribuant à alléger la marche du cheval et à réduire ainsi, notablement, la fatigue physique.

Les fig. 2 et 3 montrent que la couche 4 peut être renforcée dans la partie antérieure 10 de la semelle, en prévoyant d'incorporer une armature 17 constituée, par exemple, par une bande de textile à base d'une matière constitutive connue dans le commerce sous la dénomination KEVLAR. L'armature 17 est, de préférence, placée dans l'épaisseur de la couche 4 et possède un retour 18 suivant en retrait du bord périphérique de la partie antérieure 10. De préférence aussi, l'armature 17 comprend un segment de bande 19 entourant le passage 11.

Dans une forme de réalisation préférée, telle qu'illustrée par la fig. 5, la matière constitutive de la couche 3 et de la couche 4 est formée par un caoutchouc chargé. En outre, la couche 3 est réalisée pour s'étendre sur toute la surface supérieure de la plaque 1. Dans un tel cas, le bulbe 5 fait saillie à partir de la couche 3 et sa matière constitutive est intimement mariée avec celle de la couche 3, comme cela est schématisé par les hâchures voisines des traits mixtes "T" définissant la périphérie de la zone de mariage intime entre les matières à duretés Shore différentes de la couche 3 et du bulbe 5.

La fig. 5 montre que l'opercule 9 peut être constitué par une feuille de matière déformable et non poinçonnable rendue adhérente de la couche 4 dans la partie de surface de cette dernière correspondant à la zone 8 dépourvue d'adhérence avec la plaque 1. Un tel opercule peut être constitué, par exemple, par un feuillard métallique dont la face, dirigée vers la couche 4, a été spécialement traitée pour que, lors du moulage, il en résulte une adhérisation et une liaison entre ce feuillard et la matière constitutive de la couche 4.

La fonction d'un tel opercule 9a est identique à celle précédemment indiquée. Toutefois, comme le montre la fig. 5 en traits mixtes, après gonflage et déformation du coussin pneumatique 16, l'opercule 9a est déformé et suit la couche 4 sollicitée en déformation. L'opercule constitue alors, avantageusement, une barrière de protection contre les risques de crevaison.

Selon un autre développement de l'invention, tel qu'illustré par les fig. 6 et 7, le bulbe 5 fait partie d'une surépaisseur 20 s'élevant à partir de la couche 3 depuis la partie postérieure 14 de la semelle. La supéraisseur 20 est réalisée entièrement en même matière que la valve 5 et présente une épaisseur et une conformation choisies de manière à pouvoir coopérer avec la fourchette et/ou la sole du sabot de cheval. Ainsi, cette supéraisseur, en forme de patin ou de tampon, peut assumer une fonction de renfort s'opposant à la déformation de la plaque 1 ou de coussin orthopédique susceptible de combattre un affaissement local de la fourchette et/ou de la sole.

Dans ce sens, il faut considérer la forme en surface et en plan, illustrée par les fig. 6 et 7, comme totalement arbitraire et donnée à titre illustratif uniquement. En effet, l'épaisseur et la forme en plan du patin ou tampon 20 sont définies, dans tous les cas, en fonction du but fonctionnel assigné à un tel patin ou tampon.

Dans tous les cas, la surépaisseur 20 comporte un repère matériel 21, tel qu'une saillie formée dans l'axe du trou 6, de manière à définir le lieu d'introduction d'une aiguille de gonflage dans la valve de gonflage qui est alors entièrement incluse au patin ou tampon 20.

La fig. 6 et la fig. 7 montrent que, dans un tel cas, les matières constitutives de la couche 4 et de la surépaisseur 20 ou patin ou tampon sont, également, intimement liées, à la fois dans la périphérie de la partie postérieure 14 et dans la partie de liaison avec la couche supérieure 3.

La fig. 8 montre une autre variante de réalisation selon laquelle la couche d'usure 4 est associée à une masse 22 de matière alvéolaire à cellules ouvertes ou fermées, prévue en correspondance de la surface dépourvue d'adhérence par rapport à la zone 8 de la plaque 1. La masse 22 se présente ainsi sous la forme d'un coussin responsable d'un gonflement local permanent de la couche 4. Le coussin 22 est, lui aussi, dépourvu d'adhérence par rapport à la zone 8, de sorte qu'il est possible d'accroître le volume global du coussin en introduisant, comme dit précédemment, une charge de fluide comprimé dans l'interface non adhérant. Le coussin 22 peut occuper une surface égale ou inférieure à la zone 8 et être associé à un opercule 9 ou 9a.

La semelle décrite ci-dessus peut être réalisée, pratiquement, en procédant de la façon suivante.

Tout d'abord, une plaque 1 est découpée, puis soumise à une opération de sablage sur les deux faces, ainsi qu'à la périphérie du trou 6 initialement pratiqué en même temps que le trou 12.

La plaque ainsi préparée est ensuite revêtue, sur l'une de ses faces, d'un masque présentant la conformation devant correspondre à celle de la zone 8. Ce masque peut être rapporté, de plusieurs façons convenables connues dans la technique, et parfois, même, être formé directement par l'opercule 9 ou 9a. Selon les cas, le masque est placé sur la surface correspondante de la plaque, après apport sur cette même face d'un cache destiné à fermer, momentanément, l'orifice correspondant du trou 6.

La plaque est ensuite soumise à un traitement d'adhérisation consistant à enduire ou à projeter sur la surface apparente des deux faces et du bord périphérique, un produit d'accrochage et de liaison intime avec la matière de l'enrobage 2.

Le cas échéant, le masque est enlevé puis la plaque, ainsi préparée, est ensuite disposée dans un moule dans le fond duquel ont déjà été placés, la matière première qui sera responsable, ultérieurement, de la formation de la couche 4 et, par dessus cette matière, l'opercule 9 ou 9a traité ou non. La mise en place de la plaque s'effectue en orientant la face préalablement masquée en direction du fond du moule, pour appliquer cette face sur la couche de matière première ayant été déposée dans le fond du moule.

Dans le cas de réalisation d'une semelle du type de celui illustré par les fig. 6 et 7, le moule est ensuite complété avec apport d'une masse de matière première de mêmes caractéristiques que celle initialement déposée dans le fond du moule et destinée à former la couche 3. Le moule est ensuite, également, complété par apport d'une charge de matière première, de caractéristiques différentes et responsable de la formation ultérieure de la surépaisseur du patin ou du tampon 20 et de la valve de gonflage 5.

Le moule est ensuite fermé pour subir les opérations de montée en température, afin de donner naissance au processus de vulcanisation. Après vulcanisation, le moule est ouvert et fournit une semelle conforme à l'invention.

L'invention n'est pas limitée aux exemples décrits et représentés, car diverses modifications peuvent y être apportées sans sortir de son cadre.

0148710

13

REVENDICATIONS :

1 - Semelle pour sabot de cheval, destinée à être fixée par trois vis sur le sabot, soit directement, soit par l'intermédiaire d'un fer traditionnel déjà adapté sur le sabot, semelle du type comprenant une armature, deux couches de matière déformable disposées de part et d'autre de l'armature et reliées entre elles tout en laissant subsister entre elles dans leur partie centrale une zone dépourvue d'adhérence et en relation avec un moyen de gonflage, caractérisée en ce qu'elle comprend :

- une armature constituée par une plaque (1)
- un enrobage (2) de l'armature en matière à dureté Shore comprise entre 45 et 100, constitué en une seule partie autour de la plaque et formant :
  . une couche supérieure (3) au moins partielle adhérant à la surface supérieure de la plaque,
  . et une couche (4) dite d'usure qui est intimement reliée à la couche supérieure sur toute la périphérie de la plaque, qui adhère en partie à la face correspondante par rapport à laquelle elle comporte une zone (8) sensiblement centrale dépourvue d'adhérence et qui présente des ouvertures (15) laissant apparaître la plaque et réservées à l'encastrement de têtes de vis de fixation traversant des trous exécutés à la demande dans la plaque à partir des ouvertures,
- une zone (5) de matière de dureté Shore comprise entre 25 et 55, choisie pour son aptitude à l'auto-obstruction en cas de perforation et formée sur la face de la plaque (1) opposée à la couche d'usure (4) pour constituer une valve pour une aiguille de gonflage,
- un trou (6) pratiqué, en coïncidence avec la valve, dans la partie de ladite plaque correspondant à la zone dépourvue d'adhérence avec la couche d'usure.

2 - Semelle selon la revendication 1, caractérisée en ce qu'elle comporte une charge (16) de fluide comprimé inclus entre la plaque (1) et la couche d'usure (4) dans la zone (8) dépourvue d'adhérence.

3 - Semelle selon la revendication 1 ou 2, caractérisée en ce qu'elle comporte un coussin (22) en matière déformable élastiquement associé à la couche d'usure dans la partie de cette dernière correspondant à la zone dépourvue d'adhérence avec la plaque.

4 - Semelle selon la revendication 1, caractérisée en ce qu'elle comprend un opercule (9) en matière résistant à la perforation, placé dans l'interface non adhérant entre la plaque (1) et la couche d'usure (4) et couvrant au moins la surface du trou (6) de la plaque correspondant à la valve de gonflage (5).

5 - Semelle selon la revendication 4, caractérisée en ce que l'opercule (9a) est déformable et constitue une protection anti-crevaison adhérant à la surface de la couche d'usure dépourvue d'adhérence avec la plaque.

6 - Semelle selon la revendication 1, caractérisée en ce que la couche supérieure (3) couvre toute la plaque et inclut, intimement mariée avec elle, une zone formant valve de gonflage (5).

7 - Semelle selon la revendication 6, caractérisée en ce que la zone (5) formant la valve de gonflage fait partie d'une surépaisseur (20) s'étendant depuis le bord arrière (14) de la semelle et présentant une conformation choisie pour constituer un patin de coopération avec la fourchette du sabot d'un cheval et en ce que cette zone comporte un repère matériel (21) d'identification de la valve.

8 - Semelle selon la revendication 1, 6 ou 7, caractérisée en ce que la zone de la valve de gonflage et du patin est en caoutchouc naturel.

9 - Semelle selon la revendication 1, caractérisée en ce que la couche d'usure comporte au moins localement une armature (17).

10 - Semelle selon la revendication 1, caractérisée en ce que la plaque (1) est conformée pour comporter des bords antérieurs (1a et 1b) situés en retrait des parties correspondantes du contour de l'enrobage.

11 - Semelle selon la revendication 1, caractérisée en ce que la plaque (1) comporte un embouti (6a) de forme tronconique, faisant saillie à partir de la face de la plaque correspondant à la couche (3) et rempli de la matière constitutive de la valve de gonflage.

Fig-1

Fig-2

Fig-3

Fig. 5

Fig. 8

Fig. 9

Fig. 6

Fig. 4

Fig 7

0148710

Office européen
des brevets

**RAPPORT DE RECHERCHE EUROPEENNE**

Numéro de la demande

EP   84 42 0192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 459 615   (LEBOUC) | | A 01 L    7/02 |
| | ----- | | |

DOMAINES TECHNIQUES
RECHERCHES (Int. Cl.4)

A 01 L

Le présent rapport de recherche a été établi pour toutes les revendications

| Lieu de la recherche LA HAYE | Date d'achèvement de la recherche 25-02-1985 | Examinateur VILBIG K |
|---|---|---|